# EUROPÄISCHE PATENTSCHRIFT

(11) **EP 3 449 716 B1**
(45) Veröffentlichungstag und Bekanntmachung des Hinweises auf die Patenterteilung: **21.10.2020**
(21) Anmeldenummer: 18174892.2
(22) Anmeldetag: 29.05.2018
(51) Int. Cl.: A01D 67/00, B62D 55/116, A01D 41/00, A01D 43/08, B62D 55/02

(54) **FELDHÄCKSLER SOWIE VERFAHREN ZU DESSEN BETRIEB**
FIELD CHOPPER AND METHOD FOR THE OPERATION OF SAME
RAMASSEUSE-HACHEUSE AINSI QUE SON PROCÉDÉ DE FONCTIONNEMENT

(30) Priorität: 29.08.2017 DE 102017119790
(43) Veröffentlichungstag der Anmeldung: 06.03.2019
(73) Patentinhaber: CLAAS Selbstfahrende Erntemaschinen GmbH, 33428 Harsewinkel (DE)
(72) Erfinder: Hörmann, Dr. Heinrich, 33617 Bielefeld (DE); Silies, Andreas, 48488 Emsbüren (DE); Rackow, Sascha, 33106 Paderborn (DE); Behra, Jan-Philipp, 33332 Gütersloh (DE)
(74) Vertreter: CLAAS Gruppe

(56) Entgegenhaltungen:
- DE-A1-102005 046 553
- DE-A1-102011 114 536
- GB-A- 2 393 696
- US-E- R E36 284

## Beschreibung

Die vorliegende Anmeldung betrifft einen mit Raupenlaufwerken ausgestatteten Feldhäcksler zum Häckseln von auf einem Arbeitsfeld befindlichen Erntegut gemäß dem Oberbegriff von Anspruch 1. Weiterhin umfasst die vorliegende Anmeldung ein Verfahren zum Betrieb eines mit Raupenlaufwerken ausgestatteten Feldhäckslers, umfassend die Verfahrensschritte gemäß dem Oberbegriff von Anspruch 9.

Derartige Feldhäcksler und Verfahren sind im Stand der Technik bereits bekannt. Hierzu wird insbesondere auf das Europäische Patent EP 1 840 018 B1 sowie die Deutsche Patentanmeldung DE 10 2008 033 067 A1 hingewiesen. Diese offenbaren jeweils Raupenlaufwerke, die zur Verwendung an einen Erntefahrzeug geeignet sind. Insbesondere die letztgenannte Schrift offenbart ein Raupenlaufwerk, das an einem Feldhäcksler angeordnet ist.

Weiterhin ist aus der Deutschen Patentanmeldung DE 10 2011 114 536 A1 ein Raupenlaufwerk bekannt, dessen hinteres Hauptrad abhebbar ist, sodass der Laufgurt zumindest auf einem Teil seines unteren Abschnitts, der sich mit dem Untergrund in Kontakt befindet, von letzterem abgehoben ist. Ebenso ist es möglich, sowohl das hintere Hauptrad als auch das vordere Hauptrad abzuheben, sodass das jeweilige Raupenlaufwerk letztlich nur noch in einem Mittelbereich des unteren Abschnitts des Laufgurts im Kontakt mit dem Untergrund steht. Das Dokument GB 2 393 696 A beschreibt ein bekanntes Raupenfahrwerk, das an der vorderen und hinteren Leitrolle Aktuatoren aufweist, die zum Verspannen des Gurtbands dienen, um ein Abrutschen des Förderbandes von den Rollen zu vermeiden.

Grundsätzlich besteht insbesondere im Zuge der Grasernte das Problem, dass bei der Verwendung von Raupenlaufwerken an einem Feldhäcksler während des Wendemanövers im Vorgewende der jeweiligen Arbeitsfläche nicht unerhebliche Beschädigungen der Grasnarbe auftreten können, die auf den Eintrag besonders ausgeprägter Scherkräfte von dem Laufgurt in den Untergrund zurückzuführen sind. Dies liegt darin begründet, dass der Laufgurt mit seiner vergleichsweise großen Fläche auf dem Untergrund aufsteht und diese Fläche während des Wendemanövers entlang einer Kurve über den Untergrund geführt wird, wobei es prinzipbedingt zu einer Abscherung des Laufgurts gegenüber dem Untergrund kommt.

Mithin ist es die Aufgabe der vorliegenden Anmeldung, einen Feldhäcksler sowie ein Verfahren zu dessen Betrieb bereitzustellen, mittels dessen in den jeweiligen Untergrund eingetragene Scherkräfte im Zuge der Ausführung eines Wendemanövers des Feldhäckslers reduzierbar sind.

Die zugrunde liegende Aufgabe wird erfindungsgemäß durch einen Feldhäcksler mit den Merkmalen des Anspruchs 1 gelöst. Dieser umfasst an seinen Raupenlaufwerken jeweils zwei Abhebeorgane, mittels derer das vordere der beiden Haupträder des jeweiligen Raupenlaufwerks ausgehend von einer Nullposition in eine Abhebeposition überführbar ist. Die Nullposition ist dabei so definiert, dass bei ihrem Vorliegen das vordere Hauptrad über den Laufgurt Kräfte des Feldhäckslers auf das Arbeitsfeld übertragen kann. Mit anderen Worten steht das Raupenlaufwerk mit dem vorderen Hauptrad auf dem Arbeitsfeld mittelbar auf. Bei Vorliegen des vorderen Hauptrades in seiner Abhebeposition ist ersteres hingegen derart von dem Arbeitsfeld abgehoben, dass eine in Kontakt mit der Oberfläche des Arbeitsfeldes befindliche Kontaktfläche des Laufgurts gegenüber Vorliegen des Hauptrades in seiner Nullposition verringert ist. Mittels des Abhebens des vorderen Hauptrades wird erreicht, dass eine Kontaktfläche des Laufgurts, mit der selbiger sich in Kontakt mit der jeweiligen Oberfläche des Arbeitsfeldes befindet, verringert wird. Grundsätzlich liegt es auch im Rahmen der Erfindung, lediglich ein einziges Abhebeorgan zu verwenden. Aufgrund der zu bewegenden Massen ist dies jedoch typischerweise nicht praktikabel. Ebenso ist die Verwendung von mehr als zwei Abhebeorganen denkbar.

Weiterhin umfasst der erfindungsgemäße Feldhäcksler mindestens eine Steuerungseinrichtung, mittels derer die beschriebene Abhebung des vorderen Hauptrads automatisch in Abhängigkeit eines Lenkwinkel eines Lenkrades des Feldhäckslers ausgelöst wird. Unter einem "Lenkrad" wird im Sinne der vorliegenden Anmeldung mindestens ein Rad des Feldhäckslers verstanden, mittels dessen letzterer auf dem Arbeitsfeld in eine Kurvenfahrt zwingbar ist. Typischerweise sind die beiden an der jeweiligen Hinterachse des Feldhäckslers angeordneten Räder, die in aller Regel in Form typischer Rundreifen ausgeführt sind, als Lenkräder ausgebildet, sodass diese entsprechend um eine zumindest im Wesentlichen vertikale Lenkachse relativ zu dem übrigen Feldhäcksler verschwenkbar sind.

Unter dem Begriff "Erntegut" werden im Sinne der vorliegenden Anmeldung insbesondere Maispflanzen oder Gras verstanden, wobei das Erntegut nicht notwendigerweise mittels des Feldhäckslers geschnitten werden muss, wenngleich dies in aller Regel der Fall ist. Insbesondere am Beispiel Gras ist es durchaus üblich, dass bereits zuvor mittels einer anderen Maschine geschnittenes Gras mittels des Feldhäckslers lediglich noch "aufgesammelt" wird, mittels des Feldhäckslers gehäckselten und schließlich auf einen Transportbehälter geworfen wird.

Bezugnehmend auf ein "Raupenlaufwerk" im Sinne der vorliegenden Anmeldung besteht ein wesentlicher Vorteil gegenüber einem typischen Rad darin, dass die Kontaktfläche zwischen dem Feldhäcksler und dem jeweiligen Untergrund bei Verwendung eines Raupenlaufwerks deutlich vergrößert ist. Hierdurch ist eine Flächenpressung zwischen dem Laufgurt des Raupenlaufwerks und dem Untergrund im Vergleich zu der Flächenpressung zwischen einer Kontaktfläche eines Rades und dem Untergrund erheblich reduziert. Hieraus können sowohl verringerte Beschädigungen des jeweiligen Untergrundes als auch eine verbesserte Eignung des Feldhäckslers zum Einsatz auf wenig tragfähigen Untergrund, beispielsweise in relativ sumpfigem Gebiet, resultieren. Das mindestens eine Hilfsrad, typischerweise umfasst ein Raupenlaufwerk eine Mehrzahl von Hilfsrädern, dient dazu, den jeweils unteren Abschnitt des Laufgurts durchgehend in Kontakt mit dem Untergrund zu halten, das heißt ein Abheben des Laufgurts beispielsweise im Bereich von Unebenheiten des Untergrunds, zu vermeiden.

Der erfindungsgemäße Feldhäcksler hat viele Vorteile. Insbesondere ist er dazu hergerichtet, automatisch im Zuge der Ausführung eines Wendemanövers im Bereich eines Vorgewendes eines jeweiligen Arbeitsfeldes das vordere Hauptrad des Raupenlaufwerks bzw. der Raupenlaufwerke mittels der Abhebeorgane von dem Arbeitsfeld abzuheben. Mittels der Steuerungseinrichtung ist es dabei vor allem möglich, diesen Vorgang des Abhebens automatisch zu gestalten, sodass kein weiteres Zutun eines jeweiligen Maschinenführers erforderlich ist. Mit anderen Worten bewirkt besagter Maschinenführer entweder manuell, halbautomatisch oder vollautomatisch die Ausführung des jeweiligen Wendemanövers, wobei im Zuge desselben ein bestimmter Grenzlenkwinkel des Lenkrades bzw. der Lenkräder überschritten wird, sodass die Steuerungseinrichtung automatisch die Abhebeorgane des jeweiligen Raupenlaufwerks zumindest mittelbar ansteuert und dadurch die Überführung des vorderen Hauptrades von seiner Nullposition in seine Abhebeposition bewirkt.

Das Abheben hat letztlich zur Folge, dass die Kontaktfläche zwischen dem Laufgurt und der Oberfläche des Arbeitsfeldes reduziert ist, wodurch die im Zuge des Wendemanövers in das Arbeitsfeld eingetragenen Scherkräfte seitens des Raupenlaufwerks bzw. des zugehörigen Laufgurts deutlich reduziert werden. Im Ergebnis kann folglich mittels des erfindungsgemäßen Feldhäckslers das am Ende eines jeweiligen Arbeitsstreifens auszuführende Wendemanöver deutlich schonender für das Arbeitsfeld ausgeführt werden. Mit anderen Worten ist unter Verwendung des erfindungsgemäßen Feldhäckslers keine Beschädigung beispielsweise einer Grasnarbe des Arbeitsfeldes in solchem Ausmaß zu erwarten, wie dies unter Verwendung eines bekannten Feldhäckslers zu erwarten wäre, der mit Raupenlaufwerken ausgestattet ist.

Den erfindungsgemäßen Feldhäcksler weiter ausgestaltend ist die Kontaktfläche des Laufgurts bei Vorliegen des vorderen Hauptrades in dessen Abhebeposition mindestens 10 % gegenüber der Kontaktfläche bei Vorliegen des vorderen Hauptrades in dessen Nullposition reduziert. Vorzugsweise beträgt diese Reduktion mindestens 20 %, weiter vorzugsweise mindestens 30 %. Dabei versteht es sich, dass eine umso kleinere Kontaktfläche des Laufgurts zu einer umso geringeren Eintragung von Scherkräften in den jeweiligen Untergrund führt.

Weiterhin ist ein solcher Feldhäcksler von besonderem Vorteil, dessen Raupenlaufwerke jeweils einen 2-teiligen Rahmen aufweisen, wobei eines der Haupträder eines jeweiligen Raupenlaufwerks an einem Rahmenteil und das andere Hauptrad an dem anderen Rahmenteil des Rahmens angeordnet sind. Ferner sind die Rahmenteile in Kraft übertragender Weise miteinander verbunden sowie relativ zueinander um eine zu der Vorderachse des Feldhäckslers parallele Schwenkachse verschwenkbar. Die Verschwenkung der beiden Rahmenteile relativ zueinander ist insbesondere erforderlich, um das vordere Hauptrad des Raupenlaufwerks zwischen seiner Abhebeposition und seiner Nullposition zu überführen. Vorteilhafterweise sind die Schwenkachse und die Vorderachse voneinander beabstandet angeordnet.

Vorteilhafterweise ist mindestens eines der Abhebeorgane derart ausgebildet, dass es sich entgegengesetzt an beiden Rahmenteilen abstützt. Das heißt, dass mittels des Abhebeorgans ausgeübte Kräfte gemäß dem Prinzip von Actio und Reactio entgegengesetzt auf die beiden Rahmenteile wirken, wodurch die Verschwenkung und mithin das Abheben des vorderen Hauptrades zumindest anteilig bewirkbar ist. Am Beispiel eines zumindest im Wesentlichen horizontal ausgerichteten Abhebeorgans, das mit beiden Rahmenteilen zusammenwirkt, bedeutet dies, dass eine auf den einen Rahmenteil ausgeübte Zugkraft analog auch in den anderen Rahmenteil eingetragen wird. Dies hat den besonderen Vorteil, dass das erfindungsgemäße Anheben des vorderen Hauptrades sich auf eine Aufstandskraft des hinteren Hauptrades positiv auswirkt. Das hintere Hauptrad dient nämlich gewissermaßen als ein Teilwiderlage für die auf das vordere Hauptrad ausgeübte Abhebekraft, was zur Folge hat, dass das hintere Hauptrad ebenfalls mit einer abhebenden Kraft beaufschlagt wird. Hierdurch wird die Aufstandskraft des hinteren Hauptrades reduziert und ein Eintrag von Scherkräften in das Arbeitsfeld im Bereich des hinteren Hauptrades reduziert. Die mittels des jeweiligen Raupenlaufwerks in das Arbeitsfeld eingetragenen Vertikalkräfte verlagern sich in einer solchen Situation weiter auf das mindestens eine Hilfsrad, welches aufgrund seiner geringen Aufstandsfläche vergleichsweise geringe Scherkräfte in den Untergrund einträgt.

Weiterhin kann es von Vorteil sein, wenn mindestens eines der Abhebeorgane mit einem der Rahmenteile zusammenwirkt und gegen das mindestens eine Hilfsrad abgestützt ist. Solch ein Abhebeorgan kann insbesondere den jeweiligen Rahmenteil gegen das Hilfsrad in eine von dem Untergrund abgewandte Richtung "abdrücken", das heißt nach oben drücken. Dies bewirkt eine Verschwenkung des jeweiligen Rahmenteils gegenüber dem anderen Rahmenteil und gleichermaßen das Abheben des vorderen Hauptrades. Entsprechend versteht es sich, dass der Rahmenteil, mit dem das Abhebeorgan zusammenwirkt, vorzugsweise derjenige ist, an dem das vordere Hauptrad angeordnet ist.

Den erfindungsgemäßen Feldhäcksler weiter ausgestaltend umfassen dessen Raupenlaufwerke jeweils mindestens ein Dämpfungselement, das mit mindestens einem Rahmenteil des jeweiligen Raupenlaufwerks zusammenwirkt, sodass eine Verschwenkung des jeweiligen Rahmenteils relativ zu dem anderen Rahmenteil um die genannte Schwenkachse mittels des Dämpfungselements dämpfbar ist. Vorteilhafterweise ist das Dämpfungselement von einem der Abhebeorgane gebildet, wobei ein solches Abhebeorgan im Zuge des Abhebens des vorderen Hauptrades aktiv wirken kann und sodann im Zuge einer späteren Absenkung des vorderen Hauptrades als Dämpfungselement wirkt. Dem liegt die Überlegung zugrunde, dass das Absenken des vorderen Hauptrades nicht notwendigerweise aktiv betrieben werden muss, sondern allein durch Wirkung der Gewichtskraft des vorderen Hauptrades und der gemeinsam mit diesem abgehobenen Komponenten bestrebt ist, sich in Richtung des Arbeitsfeldes abzusenken. Mindestens eines der Abhebeorgane, vorzugsweise beide, können somit besonders gut in einer passiven Dämpfungsfunktion als Dämpfungselemente verwendet werden. Die Ausbildung eines separaten Dämpfungselements ist ebenfalls denkbar.

Weiter vorzugsweise ist mindestens eines der Abhebeorgane, vorzugsweise beide Abhebeorgane, in Form einer Kolben-Zylinder-Einheit ausgebildet, wobei vorzugsweise mindestens eines der Abhebeorgane derart ausgebildet ist, dass ein Kolben des jeweiligen Abhebeorgans sowohl aktiv aus dem zugehörigen Zylinder ausfahrbar als auch aktiv in den zugehörigen Zylinder einfahrbar ist. Derartige Abhebeorgane können besonders gut hydraulisch betrieben werden und auf diese Weise die nicht unerhebliche Gewichtskraft des vorderen Hauptrades bewältigen.

Vorteilhafterweise ist ein Kolben eines jeweiligen Abhebeorgans sowohl aktiv aus dem zugehörigen Zylinder ausfahrbar als auch aktiv in den zugehörigen Zylinder einfahrbar. Anders ausgedrückt kann mindestens eines der Abhebeorgane, vorzugsweise beide Abhebeorgane, einfach- oder doppelwirkend betreibbar sein.

In einer weiterhin bevorzugten Ausführungsform sind die beiden Abhebeorgane unabhängig voneinander hydraulisch ansteuerbar. Insbesondere ist eines der Abhebeorgane aktivierbar, während das andere Abhebeorgan inaktiv bleibt.

Weiterhin ist eine solche Ausgestaltung des Feldhäckslers zu bevorzugen, bei der die Abhebeorgane derart zusammenwirken können, dass ein Einfahren eines Kolbens aus dem zugehörigen Zylinder des einen Abhebeorgans und ein gleichzeitiges Ausfahren eines Kolbens aus dem zugehörigen Zylinder des anderen Abhebeorgans die Überführung des zugehörigen Raupenlaufwerks ausgehend von dessen Nullposition in dessen Abhebeposition bewirkt. Eine solche Ausgestaltung ist insbesondere kinematisch an einem zugehörigen Raupenlaufwerk besonders gut umsetzbar, wobei die Abhebeorgane mit ihren Abhebekräften insbesondere einen Rahmenteil des Rahmens des Raupenlaufwerks gleichsinnig um die Schwenkachse, um die der Rahmenteil verschwenken kann, verschwenken.

Ausgehend von dem Verfahren der eingangs beschriebenen Art wird die zugrunde liegende Aufgabe erfindungsgemäß durch das Verfahren gemäß Anspruch 9 gelöst. Dieses umfasst den folgenden Verfahrensschritt:
d) In Abhängigkeit eines Lenkwinkels eines Lenkrades des Feldhäckslers und/oder im Zuge der Bewegung des Feldhäckslers auf einer öffentlichen Straße wird zumindest ein vorderes Hauptrad mindestens eines der Raupenlaufwerk des Feldhäckslers von einer Oberfläche des Arbeitsfeldes abgehoben, sodass sich eine in Kontakt mit der Oberfläche befindliche Kontaktfläche eines Laufgurts des Raupenlaufwerks zumindest zeitweise verringert.

Unter einem "Arbeitsstreifen" wird im Sinne der vorliegenden Anmeldung ein Teil des jeweils zu bearbeitenden Arbeitsfeldes verstanden, der mittels des Feldhäckslers bearbeitet wird. Eine Breite des Arbeitsstreifens entspricht dabei zumindest im Wesentlichen einer Arbeitsbreite des Feldhäckslers. Typischerweise sind die einzelnen Arbeitsstreifen eines Arbeitsfeldes parallel zueinander ausgerichtet sowie zumindest im Wesentlichen in sich gerade. Eine Unterteilung des Arbeitsfeldes in eine Vielzahl derartiger Arbeitsstreifen ist für eine möglichst effiziente Bearbeitung des Arbeitsfeldes von Vorteil.

Dabei versteht es sich, dass der Feldhäcksler nach einer Fertigstellung eines jeweiligen Arbeitsstreifens, bei der er typischerweise in einem Randbereich des jeweiligen Arbeitsfeldes angekommen ist, ein Wendemanöver ausführen muss, um sodann den jeweils nächsten Arbeitsstreifen bearbeiten zu können. Typischerweise sind die einzelnen Arbeitsstreifen, die nacheinander mittels des Feldhäckslers bearbeitet werden, unmittelbar nebeneinander angeordnet, sodass sie eine gemeinsame Grenze aufweisen. Ebenso ist es denkbar, dass aufeinanderfolgend bearbeitete Arbeitsstreifen beabstandet voneinander auf dem Arbeitsfeld angeordnet sind, um dem Feldhäcksler das Wendemanöver zu vereinfachen. Dies kann insbesondere von Vorteil sein, wenn der Feldhäcksler einen vergleichsweise großen Wendekreis im Verhältnis zu seiner Arbeitsbreite und somit zu der Breite des jeweiligen Arbeitsstreifens aufweist. Neben einer Lenkung des Feldhäckslers im Zuge des Wendemanövers können selbstverständlich auch durch andere Umstände motivierte Lenkbewegungen vorgenommen werden, deren Indikation zur Abhebung zumindest des vorderen Hauptrades ebenso gegeben ist.

Ein jeweiliges Wendemanöver wird typischerweise in einem Randbereich des jeweiligen Arbeitsfeldes ausgeführt. Dieser zum Wenden vorgesehene Randbereich bildet im Sinne der vorliegenden Anmeldung das sogenannte "Vorgewende".

Das erfindungsgemäße Verfahren ist mittels des erfindungsgemäßen Feldhäckslers besonders einfach ausführbar. Die Vorteile, die sich im Zuge der Ausführung des erfindungsgemäßen Verfahrens ergeben, sind vorstehend bereits in Verbindung mit dem Feldhäcksler dargelegt worden. Insbesondere trägt das erfindungsgemäße Verfahren dazu bei, die Oberfläche des jeweilig bearbeiteten Arbeitsfeldes, insbesondere eine Grasnarbe, vor dem Eintrag übermäßiger Scherkräfte im Zuge einer Kurvenfahrt des Feldhäckslers, insbesondere im Zusammenhang mit der Ausführung des Wendemanövers, zu schützen und somit Beschädigungen an dem Arbeitsfeld zumindest zu reduzieren.

Weiterhin kann der Vorteil erwirkt werden, die Kontaktfläche des Laufgurts während einer Fahrt über eine öffentliche Straße zu reduzieren. Auf diese Weise kann der ansonsten durchaus erhebliche Verschleiß des Laufgurts im Zuge des Transfers des Feldhäckslers zwischen den zu bearbeiteten Schlägen deutlich vermindert werden.

In einer vorteilhaften Ausgestaltung des erfindungsgemäßen Verfahrens wird das Abheben des vorderen Hauptrades automatisch in Abhängigkeit eines Lenkwinkels eines Längengrades des Feldhäckslers ausgelöst. Ein oberer Grenzlenkwinkel, ab dessen Überschreitung das Abheben des vorderen Hauptrades abgehoben wird, beträgt maximal 20°, vorzugsweise maximal 17,5°, weiter vorzugsweise maximal 15°, gegenüber einer Nulllenkung, bei deren Einstellung der Feldhäcksler geradeaus fährt. Es versteht sich, dass das automatische Abheben des vorderen Hauptrades des jeweiligen Raupenlaufwerks nicht bereits bei jedem, insbesondere nicht bei besonders geringem Lenkeinschlag, ausgelöst werden sollte. Insbesondere ist es üblich, dass im Zuge der Überstreichung eines jeweiligen Arbeitsstreifens des Arbeitsfeldes seitens des Maschinenführers oder auch automatisch zumindest kleinere Kurskorrekturen vorgenommen werden, die den Feldhäcksler von einer vollständig und exakt geraden Fahrspur abbringen. Derart kleinere Lenkkorrekturen sollten nicht unmittelbar zu dem Abheben des vorderen Hauptrades des Raupenlaufwerks führen. Letzteres sollte bewusst auf erhebliche Lenkbewegungen, insbesondere ein jeweiliges Wendemanöver im Bereich eines Vorgewendes eines Arbeitsfeldes, beschränkt sein. Ein solches Wendemanöver unterscheidet sich von den üblichen Kurskorrekturen während der Bearbeitung eines Arbeitsstreifens durch den betragsmäßig stark abweichenden Lenkeinschlag bzw. Lenkwinkel des jeweiligen Lenkrades. Entsprechend ist es sinnvoll, das automatische Abheben des vorderen Hauptrades von der Überschreitung eines bestimmten Grenzlenkwinkels abhängig zu machen, der einen nicht vernachlässigbaren Betrag annimmt. Insbesondere ist eine Beschädigung des Arbeitsfeldes lediglich in solchen Fällen zu erwarten, in denen ein derartiger Grenzlenkwinkel überschritten wird.

Sofern das Abheben des vorderen Hauptrades in Abhängigkeit von einem Lenkwinkel des Lenkrades ausgelöst wird, kann es besonders vorteilhaft sein, wenn selbiges erst dann ausgelöst wird, wenn der Lenkwinkel des Lenkrades den oberen Grenzlenkwinkel mindestens für die Dauer eines Schwellenzeitraums überschreitet, wobei die Dauer des Schwellenzeitraums vorzugsweise mindestens 2 Sekunden, weiter vorzugsweise mindestens 3 Sekunden, beträgt. Auf diese Weise ist sichergestellt, dass nicht bereits eine besonders kurze Überschreitung des Grenzlenkwinkels das Abheben des vorderen Hauptrades auslöst.

Analog zu dem Abheben des vorderen Hauptrades kann es umgekehrt ferner von Vorteil sein, wenn das vordere Hauptrad automatisch in Abhängigkeit des Lenkwinkels des Lenkrades wieder abgesenkt wird, wobei ein unterer Grenzlenkwinkel, dessen Unterschreitung die Absenkung auslöst, höchstens 15°, vorzugsweise höchstens 13°, weiter vorzugsweise höchstens 11°, gegenüber der Nulllenkung beträgt. Auch hier ist vorzugsweise ein Schwellenzeitraum vorgesehen, dessen Dauer zu überschreiten ist, bevor das automatische Absenken ausgelöst wird.

Weiterhin ist ein solches Verfahren von besonderem Vorteil, bei dem das vordere Hauptrad nach dem vollständigen Überstreichen eines jeweils letzte Arbeitsstreifens abgehoben und vor dem Beginn des Überstreichens des jeweils nächsten Arbeitsstreifens wieder abgesenkt wird. Bei der Durchführung dieses Verfahrens ist mit anderen Worten das vordere Hauptrad des jeweiligen Raupenlaufwerks während des Wendemanövers abgehoben, sodass die Kontaktfläche des Laufgurts mit der Oberfläche des Arbeitsfeldes während des Wendemanövers reduziert ist.

In einer weiterhin vorteilhaften Ausgestaltung des erfindungsgemäßen Verfahrens wird das Abheben des vorderen Hauptrades zumindest teilautomatisch auf eine Eingabe des den Feldhäcksler dienenden Maschinenführers ausgelöst. Insbesondere ist es denkbar, dass das Abheben des vorderen Hauptrades nach dem Überstreichen eines Arbeitsstreifens ohne weiteres Zutun des Maschinenführers erfolgt. Beispielsweise ist es denkbar, den Feldhäcksler mit einer Positionierungseinrichtung, insbesondere einem GPS-Empfänger, auszustatten und von dieser Positionierungseinrichtung empfangene Daten zur automatischen Steuerung des Raupenlaufwerks zu verwenden.

Weiterhin ist eine Vorgehensweise zu bevorzugen, bei der das Abheben des vorderen Hauptrades vollautomatisch in Abhängigkeit mindestens eines Betriebsparameters des Feldhäckslers erfolgt. Insbesondere ist es denkbar, das vordere Hauptrad in Abhängigkeit von einer Arbeitsposition eines Vorsatzgeräts des Feldhäckslers abhängig zu machen. Wird das Vorsatzgerät beispielsweise angehoben, sodass es nicht zur Ernte des Ernteguts geeignet ist, kann das Abheben des vorderen Hauptrades ausgelöst werden. Ebenso ist es denkbar, dass das Abheben in Abhängigkeit von der relativen und/oder absoluten Position des Feldhäckslers auf dem Arbeitsfeld erfolgt. Auf diese Weise ist der Maschinenführer vollständig von der Überwachung des Raupenlaufwerks hinsichtlich dem Abheben bzw. Absenken des vorderen Hauptrades desselben entbunden.

Weiterhin kann ein solches Verfahren von Vorteil sein, bei dem das Absenken des vorderen Hauptrades vor dem Überstreichen eines jeweils als nächsten zu bearbeitenden Arbeitsstreifens zumindest teilautomatisch auf Eingabe des den Feldhäcksler bedienenden Maschinenführers erfolgt. Besonders zu bevorzugen ist dabei ein solches Verfahren, bei dem das Absenken vollautomatisch erfolgt in Abhängigkeit mindestens eines Betriebsparameters des Feldhäckslers. Auch hier kann es vorteilhaft sein, als Betriebsparameter die relative und/oder absolute Position des Feldhäckslers auf dem Arbeitsfeld heranzuziehen. Ebenso ist auch hier die Verknüpfung mit der Arbeitsposition des Vorsatzgeräts und/oder ein gemessener Durchsatz in einem Einzugsbereich des Feldhäckslers denkbar. Letzteres beruht auf der Überlegung, dass das vordere Hauptrad des jeweiligen Raupenlaufwerks jedenfalls dann abgesenkt werden sollte, wenn der Feldhäcksler sich im Erntebetrieb befindet und Erntegut verarbeitet. Mittels dieser Verfahrensweise ist insbesondere sichergestellt, dass das Absenken des vorderen Hauptrades des Raupenlaufwerks nicht versehentlich vergessen werden kann, sodass sichergestellt ist, dass der untere Abschnitt des Laufgurts des Raupenlaufwerks im Zuge der Überstreichung des jeweils nächsten Arbeitsstreifens wieder mit seiner vollen Kontaktfläche mit der Oberfläche des Arbeitsfeldes in Kontakt steht.

Zur weiteren Automatisierung des gesamten Wendemanövers des Feldhäckslers ist ferner ein solches Verfahren denkbar, bei dem das Wendemanöver zumindest teilautomatisch auf Eingabe des den Feldhäcksler Bedienenden Maschinenführers ausgeführt wird. Dabei werden sowohl das Abheben des vorderen Hauptrades des Raupenlaufwerks, die Durchführung des Wendemanövers als solches, das heißt insbesondere die Lenkung des Feldhäckslers, als auch das Absenken des vorderen Hauptrades vor dem Überstreichen des nächsten Arbeitsstreifens ohne Zutun des Maschinenführers ausgeführt. Beispielsweise ist es denkbar, dass der Maschinenführer nach dem Erreichen eines Endes eines jeweiligen Arbeitsstreifens mittels Betätigung eines Schalters das automatische Wendemanöver aktiviert, im Zuge dessen das vordere Hauptrad des jeweiligen Raupenlaufwerks automatisch erst abgehoben und schließlich wieder abgesenkt wird.

Vorteilhafterweise wird ein solches automatisches Wendemanöver vollautomatisch ausgeführt und zwar in Abhängigkeit von mindestens einem Betriebsparameters des Feldhäckslers, insbesondere in Abhängigkeit seiner relativen und/oder absoluten Position auf dem Arbeitsfeld. Eine manuelle Auslösung des Wendemanövers ist sodann nicht erforderlich. Auch ist eine vollautomatische Abhebung des vorderen Hauptrades vor Befahren einer öffentlichen Straße denkbar.

Der erfindungsgemäße Feldhäcksler sowie das erfindungsgemäße Verfahren werden nachstehend anhand eines Ausführungsbeispiels, das in den Figuren dargestellt ist, näher erläutert. Es zeigt:
- Fig. 1:: Einen Teilquerschnitt durch einen erfindungsgemäßen Feldhäcksler, dessen Raupenlaufwerke sich in ihrer Nullposition befinden,
- Fig. 2:: Der Teilquerschnitt gemäß Figur 1, wobei sich die Raupenlaufwerke in ihrer Abhebeposition befinden,
- Fig. 3:: Ein Schnitt eines Raupenlaufwerks, das sich in seiner Nullposition befindet und
- Fig. 4:: Eine Draufsicht auf ein Arbeitsfeld, das in eine Mehrzahl von Arbeitsstreifen unterteilt ist.

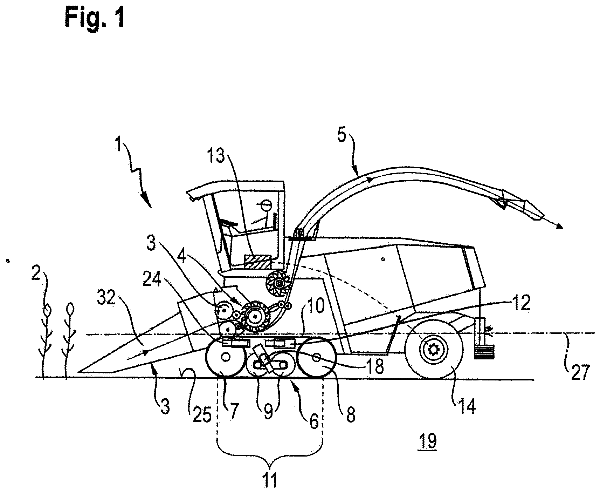

Das Ausführungsbeispiel, das in den **Figuren 1 bis 4** gezeigt ist, umfasst einen erfindungsgemäßen Feldhäcksler **1,** mittels dessen Erntegut **2** geerntet werden kann. Hierzu verfügt der Feldhäcksler **1** zumindest über ein Vorsatzgerät **31** mit einem Einzugsbereich **32,** ein Förderorgan **3,** ein Häckselorgan **4** sowie ein Auswurforgan **5.** Mittels des Förderorgans **3** wird das Erntegut **2** in Richtung des Häckselorgans **4** gefördert, dort mittels des Häckselorgans **4** gehäckselt und schließlich in Richtung des Auswurforgans **5** befördert, mittels dessen das Erntegut **2** auf einen in den Figuren nicht dargestellten Transportbehälter geworfen wird.

Der erfindungsgemäße Feldhäcksler **1** umfasst insgesamt zwei Achsen, nämlich eine Vorderachse und eine Hinterachse. An der Vorderachse wirkt der Feldhäcksler **1** beidseitig mit jeweils einem Raupenlaufwerk **6** zusammen. An der Hinterachse verfügt der Feldhäcksler **1** über typische Rundräder, die hier als Lenkräder **14** ausgebildet sind.

Die Raupenlaufwerke **6** verfügen jeweils über zwei Haupträder **7, 8** wobei ein Hauptrad **7** relativ zu dem jeweils anderen Hauptrad **8** betrachtet weiter vorne an den Feldhäcksler **1** angeordnet ist. Weiterhin verfügt jedes der Raupenlaufwerke **6** über zwei Hilfsräder **9,** die zwischen den Haupträdern **7, 8** angeordnet sind. Ferner weist jedes der Raupenlaufwerke **6** einen umlaufenden Laufgurt **10** auf, der die außenliegenden Haupträder **7, 8** umspannt. Der Laufgurt **10** weist einen unteren Abschnitt **11** auf, mit dem er mit einer Oberfläche **25** eines jeweiligen Arbeitsfeldes **19** in unmittelbarem Kontakt treten kann. Die Hilfsräder **9** sind derart an dem jeweiligen Raupenlaufwerk **6** angeordnet, dass sie mit dem unteren Abschnitt **11** des Laufgurts **10** zusammenwirken, sodass eine Kontaktfläche **26,** die der Laufgurt **10** mit der Oberfläche **25** des Arbeitsfeldes **19** ausbildet, sich nicht im Zuge des Überfahrens einer Erhebung, insbesondere einem Hügel oder einem Gegenstand, nennenswert verkleinert. Mit anderen Worten sorgen die Hilfsräder **9** dafür, den Laufgurt **10** fortwährend auf die Oberfläche **25** des Arbeitsfeldes **19** zu drücken und auf diese Weise die Kontaktfläche **26** möglichst durchgehend auf einem maximalen Maß zu halten.

Jedes der Raupenlaufwerke **6** verfügt über ein Gurtspannorgan **24,** mittels dessen die beiden Haupträder **7, 8** in eine Richtung parallel zu einer Längsachse **27** des Feldhäckslers **1** relativ zueinander bewegbar sind. Auf diese Weise ist es mittels des Gurtspannorgans **24** möglich, den Laufgurt **10** zu spannen. Insbesondere kann das Gurtspannorgan **24** mit einer zugehörigen, in den Figuren nicht dargestellten Steuerungseinrichtung zusammenwirken, sodass die auf den Laufgurt **10** wirkende Spannung fortwährend auf einem vorgegebenen Sollwert gehalten wird. Das Gurtspannorgan **24** kann hierzu insbesondere von einer Kolben-Zylinder-Einheit gebildet sein, die je nach Spannungszustand des Laufgurts **10** den Abstand zwischen den Haupträdern **7, 8** des Raupenlaufwerks **6** verändert.

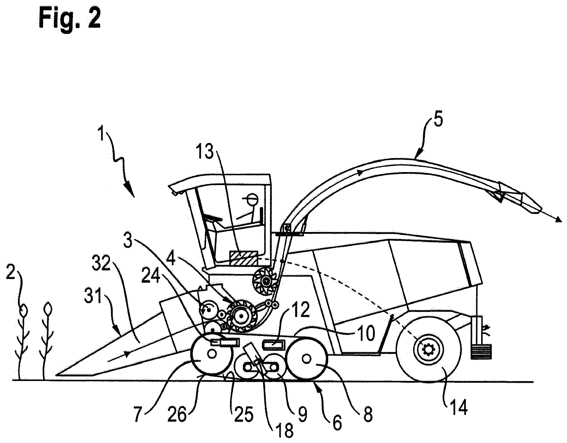

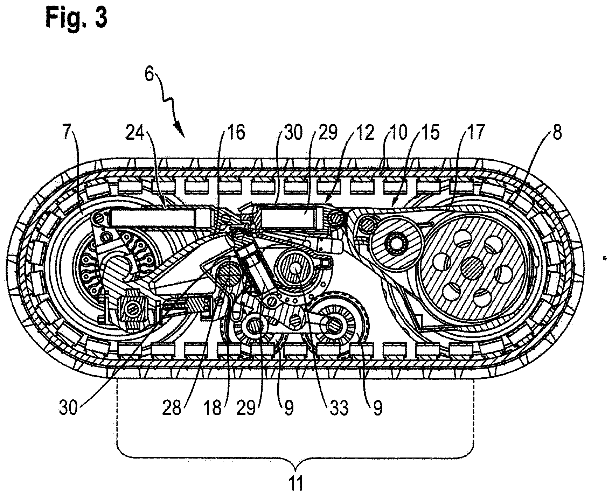

Erfindungsgemäß verfügt das Raupenlaufwerk **6** des erfindungsgemäßen Feldhäckslers **1** hier über zwei Abhebeorgane **12, 18,** mittels derer das vordere Hauptrad **7** des Raupenlaufwerks **6** ausgehend von seiner in **Figur 1** dargestellten Nullposition in seine Abhebeposition überführbar ist. Diese Abhebeposition des vorderen Hauptrads **7** ist in **Figur 2** veranschaulicht. Die Abhebeorgane **12, 18** sind in dem gezeigten Beispiel vergleichbar zu dem Gurtspannorgan **24** jeweils von einer Kolben-Zylinder-Einheit gebildet. Die Abhebeorgane **12, 18** wirken jeweils mit einem Rahmen **15** des zugehörigen Raupenlaufwerks **6** zusammen. Dieser Rahmen **15** ergibt sich besonders gut anhand der Darstellung gemäß **Figur 3****.** Der Rahmen **15** umfasst insgesamt zwei Rahmenteile **16, 17,** wobei das eine Rahmenteil **16** mit dem vorderen Hauptrad **7** und das andere Rahmenteil **17** mit dem hinteren Hauptrad **8** zusammenwirken. Das eine Abhebeorgan **12** ist hier so ausgebildet, dass dessen Kolben **29** mit dem vorderen Rahmenteil **16** und dessen Zylinder **30** mit dem hinteren Rahmenteil **17** verbunden sind. Eine Aktivierung des Abhebeorgans **12** führt mithin zu einander entgegengesetzten Krafteinwirkungen auf die beiden Rahmenteile **16, 17.** Die Rahmenteile **16, 17** sind in Kraft übertragender Weise miteinander verbunden, wobei diese Verbindung derart gelenkig ausgebildet ist, dass die Rahmenteile **16, 17** um eine zu einer Anlenkachse **33** des Feldhäckslers **1** parallele Schwenkachse **28** relativ zueinander verschwenkbar sind, wobei die Anlenkachse **33** eine weitere Schwenkachse des jeweiligen Raupenlaufwerks **6** beschreibt, um die das Raupenlaufwerk **6** als Ganzes relativ zu dem Feldhäcksler **1** verschwenkbar ist. Die Anlenkachse **33** und die Schwenkachse **28** sind voneinander beabstandet angeordnet.

Das Abhebeorgan **12** ist aktiv ausgebildet, sodass eine Bewegung des Kolbens **29** relativ zu dem Zylinder **30** forciert werden kann. Dies kann insbesondere mittels eines in den Figuren nicht dargestellten Hydraulikaggregats bewirkt werden, mittels dessen ein Fluiddruck eines in einem Arbeitsraum des Abhebeorgans **12** befindlichen Arbeitsfluids veränderbar ist. Infolge einer Betätigung des Abhebeorgans **12** werden zunächst dessen Kolben **29** und Zylinder **30** und dadurch schließlich die beiden Rahmenteile **16, 17** relativ zueinander bewegt und schließlich in Zusammenwirkung mit dem anderen Abhebeorgan **18** um die genannte Schwenkachse **28** relativ zueinander verschwenkt, wobei sich insbesondere ausgehend von der Nullposition des vorderen Hauptrades **7** eine Bewegung des vorderen Rahmenteils **16** einstellt, mittels derer das vordere Hauptrad **7** von der Oberfläche **25** des Arbeitsfeldes **19** abgehoben und mithin in seiner Abhebeposition überführt wird. Diese Aktivierung des Abhebeorgans **12** geht in dem gezeigten Beispiel damit einher, dass dessen Kolben **29** in dessen Zylinder **30** einfährt. Das Abhebeorgan **12** ist hier doppelwirkend ausgebildet. Das heißt, dass der Kolben **29** sowohl aktiv in den Zylinder **30** eingefahren als auch aktiv aus dem Zylinder **30** ausgefahren werden kann. Das zweite Abhebeorgan **18** ist demgegenüber hier lediglich einfachwirkend ausgebildet, wobei dessen Kolben **29** lediglich aktiv aus dem zugehörigen Zylinder **30** ausgefahren werden kann.

Erfindungsgemäß verfügen die Raupenlaufwerke **6** in dem gezeigten Beispiel jeweils ferner über das bereits genannte zweite Abhebeorgan **18.** Dieses wirkt hier mit dem vorderen Rahmenteil **16** sowie mit den Hilfsrädern **9** zusammen. Das zweite Abhebeorgan **18** ist gleichermaßen von einer Kolben-Zylinder-Einheit gebildet, wobei es leicht gegen die Vertikale geneigt ausgerichtet ist. Das Abhebeorgan **18** ist dazu geeignet, eine Abhebekraft auf den Rahmenteil **16** auszuüben und letzteren auf diese Weise gemeinsam mit dem ersten Abhebeorgan **12** um die Schwenkachse **28** zu verschwenken und dadurch das vordere Hauptrad **7** abzuheben. Die auf den Rahmenteil **16** ausgeübte Abhebekraft des Abhebeorgans **18** wird über die Hilfsräder **9** in den Untergrund eingeleitet. Die Aktivierung des zweiten Abhebeorgans **18** führt dazu, dass sich dessen Kolben **29** aus dessen Zylinder **30** heraus bewegt, sodass sich das Abhebeorgan **18** insgesamt verlängert. Wie bereits beschrieben, ist das zweite Abhebeorgan **18** hier einfachwirkend ausgestaltet. Das Einfahren des Kolbens **29** in den Zylinder **30** im Zuge der Absenkung des vorderen Hauptrades **7** erfolgt mithin allein durch Wirkung der Gewichtskraft des vorderen Hauptrades **7.**

Wie sich insbesondere anhand der Darstellung gemäß **Figur 2** ergibt, führt das Abheben des vorderen Hauptrades **7** zu einer Verkleinerung der Kontaktfläche **26,** die zwischen dem Laufgurt **10** und der Oberfläche **25** des Arbeitsfeldes **19** vorliegt. Diese verkleinerte Kontaktfläche **26** bietet den Vorteil, dass eine Drehung des zugehörigen Raupenlaufwerks **6** um eine vertikale Achse relativ zu der Oberfläche **25** des Arbeitsfeldes **19** mit einem vergleichsweise geringen Eintrag von Scherkräften in das Arbeitsfeld **19** einhergeht. Hierdurch kann insbesondere eine Richtungsänderung des erfindungsgemäßen Feldhäckslers **1** bei Vorliegen seiner Raupenlaufwerke **6** mit jeweils abgehobenen vorderen Haupträdern **7** vergleichsweise schadfrei bzw. schadarm vorgenommen werden, das heißt insbesondere unter Inkaufnahme lediglich geringer Beschädigungen eines oberflächennahen Bereichs des Arbeitsfeldes **19.**

In dem gezeigten Beispiel ist das zweite Abhebeorgan **18** ferner derart hergerichtet, dass es gleichzeitig zu seiner Abhebefunktion eine Dämpfungsfunktion erfüllt und somit auch als Dämpfungselement wirkt. Als solches kann das Abhebeorgan **18** bewirken, dass insbesondere eine abwärts gerichtete Bewegung des vorderen Hauptrades **7** im Zuge von dessen Absenkung gedämpft wird, sodass ein "hartes Aufschlagen" des vorderen Hauptrades **7** auf die Oberfläche **25** des Arbeitsfeldes **19** vermieden wird. Insbesondere kann der Kolben **29** des Abhebeorgans **18** in seinem Inneren einen Gasraum umfassen, der als Gasfeder wirken kann.

Auch das Abhebeorgan **12** kann neben seiner aktiven Funktion zum Abheben des vorderen Hauptrades **7** ferner eine passive Dämpfungsfunktion übernehmen und gewissermaßen als Dämpfungselement wirken. Dies ist insbesondere während eines normalen Betriebs des Feldhäckslers **1** von Interesse, in dem der Laufgurt **10** maximal auf dem Arbeitsfeld **19** aufliegt. Für den Fall, dass ein jeweiliges Raupenlaufwerk **6** ein Hindernis überfährt, kommt es zu einer Verschwenkung der beiden Rahmenteile **16, 17** relativ zueinander. Diese von außen aufgezwungene Relativbewegung der beiden Rahmenteile **16, 17** zueinander ist sodann mittels des Abhebeorgans **12** in seiner Dämpfungsfunktion dämpfbar, sodass es zu keinen schlagartigen Bewegungen kommt.

Erfindungsgemäß verfügt der Feldhäcksler **1** zudem über eine Steuerungseinrichtung **13,** die sich rein schematisch aus den **Figuren 1** **und** **2** ergibt. Die Steuerungseinrichtung **13** wirkt mit den hinteren Lenkrädern **14** zusammen, sodass ein jeweiliger Lenkwinkel, der eine Richtungsänderung des Feldhäckslers **1** abweichend von einer Geradeausfahrt bewirkt, mittels der Steuerungseinrichtung **13** erfasst wird. Letztere wirkt ferner zumindest mittelbar mit den Abhebeorganen **12** der beiden Raupenlaufwerke **6** zusammen, sodass die Abhebeorgane **12,** vorzugsweise unabhängig voneinander, zumindest mittelbar mittels der Steuerungseinrichtung **13** ansteuerbar sind. Insbesondere kann die Steuerungseinrichtung **13** unmittelbar mit dem genannten Hydraulikaggregat zusammenwirken, mittels dessen schließlich die Abhebeorgane **12** aktivierbar sind.

In dem gezeigten Beispiel ist die Steuerungseinrichtung **13** derart konfiguriert, dass sie in Abhängigkeit eines Lenkwinkels der Lenkräder **14** die Abhebeorgane **12, 18** aktiviert, sodass das vordere Hauptrad **7** ausgehend von seiner Nullposition in seine Abhebeposition oder umgekehrt überführt wird. Dabei ist es vorgesehen, dass die Aktivierung der Abhebeorgane **12, 18** erst dann stattfindet, wenn der Lenkwinkel einen vorbestimmten Grenzlenkwinkel übersteigt. Letzterer kann beispielsweise zu 13° gewählt sein, was bedeutet, dass ab einem Lenkeinschlag von mehr als 13° die Steuerungseinrichtung **13** automatisch, das heißt ohne weiteres Zutun des Maschinenführers, das Abheben des vorderen Hauptrades **7** bewirkt, sodass die gewünschte Kurvenfahrt des Feldhäckslers **1** möglichst schadfrei für das Arbeitsfeld **19** ablaufen kann. Auf diese Weise ist eine automatische Steuerung der Überführung des vorderen Hauptrades **7** zwischen seinen Positionen möglich. Das Abheben wird in dem gezeigten Beispiel gleichwohl erst dann ausgelöst, wenn der beschriebene Grenzlenkwinkel für eine Dauer überschritten wird, die die Dauer eines Schwellenzeitraums übersteigt. Letzterer ist hier zu 0,5 Sekunden gewählt.

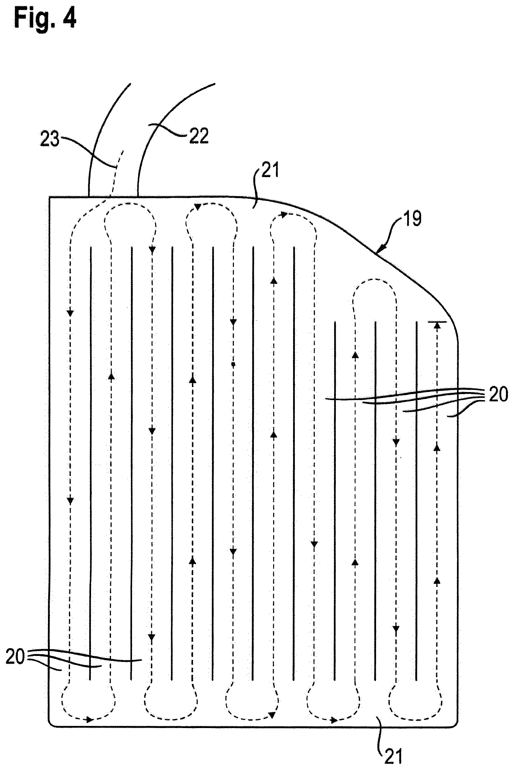

Anhand der Darstellung gemäß **Figur 4** wird ein beispielhafter Arbeitsablauf zur Bearbeitung eines Arbeitsfeldes **19** mittels des erfindungsgemäßen Feldhäckslers **1** skizzenhaft veranschaulicht. Der Feldhäcksler **1** gelangt zunächst mittels eines Feldweges **22** auf das Arbeitsfeld **19.** Auf dem Arbeitsfeld **19** bewegt sich der Feldhäcksler **1** entlang einer in **Figur 5** gestrichelt dargestellten Fahrspur **23.** Um das Arbeitsfeld **19** möglichst effizient bearbeiten zu können, wird selbiges in einzelne Fahrstreifen **20** unterteilt, die zumindest im Wesentlichen parallel zueinander angeordnet sind sowie in sich gerade verlaufen. Um nach einer vollständigen Bearbeitung eines jeweiligen Fahrstreifens **20** den jeweils nächsten Fahrstreifen **20** erreichen zu können, muss der Feldhäcksler **1** im Bereich eines Vorgewendes **21** des Arbeitsfeldes **19** ein Wendemanöver ausführen. Es versteht sich, dass die Ausführung dieses Wendemanövers regelmäßig mit der Beschreitung einer vergleichsweise engen Kurvenfahrt des Feldhäckslers **1** einhergeht. Gemäß vorstehender Erläuterung resultiert hieraus ein Beschädigungsrisiko für zumindest einen oberflächennahen Bereich des Arbeitsfeldes **19.** Derartige Beschädigungen können insbesondere für Grasfelder besonders nachteilig sein.

Erfindungsgemäß werden zur Reduzierung dieses Beschädigungspotenzials während des Wendemanövers die vorderen Haupträder **7** der beiden Raupenlaufwerke **6** des Feldhäckslers **1** von dem Arbeitsfeld **19** abgehoben, um die Kontaktfläche **26** zwischen dem Laufgurt **10** und der Oberfläche **25** des Arbeitsfeldes **19** zu reduzieren. Dies bewirkt die bereits beschriebene Reduktion des Eintrags von Scherkräften in das Arbeitsfeld **19,** wodurch schließlich die Beschädigung des letzteren reduziert wird. Das Abheben des vorderen Hauptrades **7** kann mittels der Steuerungseinrichtung **13** automatisch in Abhängigkeit des Lenkwinkels der hinteren Lenkräder **14** in der beschriebenen Weise erfolgen. Ein weiteres Eingreifen des Maschinenführers des Feldhäckslers **1** ist mithin nicht unbedingt erforderlich.

### Bezugszeichenliste

- 1: Feldhäcksler
- 2: Erntegut
- 3: Förderorgan
- 4: Häckselorgan
- 5: Auswurforgan
- 6: Raupenfahrwerk
- 7: vorderes Hauptrad
- 8: hinteres Hauptrad
- 9: Hilfsrad
- 10: Laufgurt
- 11: unterer Abschnitt des Laufgurts
- 12: Abhebeorgan
- 13: Steuerungseinrichtung
- 14: Lenkrad
- 15: Rahmen
- 16: Rahmenteil
- 17: Rahmenteil
- 18: Abhebeorgan
- 19: Arbeitsfeld
- 20: Arbeitsstreifen
- 21: Vorgewende
- 22: Feldweg
- 23: Fahrspur
- 24: Gurtspannorgan
- 25: Oberfläche des Arbeitsfeldes
- 26: Kontaktfläche des Laufgurts
- 27: Längsachse des Feldhäckslers
- 28: Schwenkachse
- 29: Kolben
- 30: Zylinder
- 31: Vorsatzgerät
- 32: Einzugsbereich
- 33: Anlenkachse

## Patentansprüche

1. Feldhäcksler (1) zum Häckseln von auf einem Arbeitsfeld (19) befindlichen Erntegut (2), umfassend
- mindestens ein Förderorgan (3) zur Förderung von geschnittenem Erntegut (2) in Richtung eines Häckselorgans (4),
- mindestens ein Häckselorgan (4) zum Häckseln des geschnittenen Ernteguts (2), sowie
- mindestens ein Auswurforgan (5) zum Auswurf von gehäckseltem Erntegut (2),
wobei der Feldhäcksler (1) ferner mindestens zwei Raupenlaufwerke (6) aufweist, die an gegenüberliegenden Enden einer Vorderachse des Feldhäckslers (1) angeordnet sind, die Raupenlaufwerke (6) jeweils umfassend
- zwei in Längsrichtung des Feldhäckslers (1) hintereinander sowie einander gegenüberliegende Haupträder (7, 8),
- mindestens ein zwischen den Haupträdern (7, 8) angeordnetes Hilfsrad (9) sowie
- mindestens einen die Haupträder (7, 8) umspannenden Laufgurt (10),
wobei das Hilfsrad (9) mit einem unteren Abschnitt (11) des Laufgurts (10) zusammenwirkt, sodass über das jeweilige Raupenlaufwerk (6) in einen Untergrund abzuleitende Kräfte zumindest anteilig mittels des Hilfsrads (9) abgeleitet werden,
**gekennzeichnet durch**
jeweils zwei an den Raupenlaufwerken (6) angeordnete Abhebeorgane (12, 18), mittels derer zumindest das vordere der beiden Haupträder (7, 8) des jeweiligen Raupenlaufwerks (6) ausgehend von einer Nullposition in eine Abhebeposition überführbar ist, wobei das vordere Hauptrad (7) bei Vorliegen in seiner Nullposition dazu geeignet ist, über den Laufgurt (10) Kräfte des Feldhäckslers (1) auf das Arbeitsfeld (19) zu übertragen und bei Vorliegen in seiner Abhebeposition derart vom Arbeitsfeld (19) abgehoben ist, dass eine in Kontakt mit der Oberfläche (25) des Arbeitsfeldes (19) befindliche Kontaktfläche (26) des Laufgurts (10) gegenüber Vorliegen des Hauptrades (7) in seiner Nullposition verringert ist,
sowie durch mindestens eine Steuerungseinrichtung (13), die derart eingerichtet ist, dass mittels der Steuerungseinrichtung (13) die Abhebung des vorderen Hauptrads (7) automatisch in Abhängigkeit eines Lenkwinkels eines Lenkrades (14) des Feldhäckslers (1) ausgelöst wird.

2. Feldhäcksler (1) nach Anspruch 1, **dadurch gekennzeichnet, dass** die Kontaktfläche (26) des Laufgurts (10) bei Vorliegen des vorderen Hauptrades (7) in dessen Abhebeposition um mindestens 10 %, vorzugsweise mindestens 20 %, weiter vorzugsweise mindestens 30 %, gegenüber der Kontaktfläche (26) bei Vorliegen des vorderen Hauptrades (7) in seiner Nullposition reduziert ist.

3. Feldhäcksler (1) nach Anspruch 1 oder 2, **dadurch gekennzeichnet, dass** die Raupenlaufwerke (6) jeweils einen zweiteiligen Rahmen (15) aufweisen, wobei jeweils eines der Haupträder (7, 8) an einem Rahmenteil (16, 17) des Rahmens (15) angeordnet ist und die Rahmenteile (16, 17) in Kraft übertragender Weise sowie relativ zueinander um eine zu der Vorderachse des Feldhäckslers (1) parallele Schwenkachse (28) verschwenkbar miteinander verbunden sind, wobei die Abhebeorgane (12, 18) dazu geeignet sind, die Rahmenteile (16, 17) relativ zueinander zu verschwenken, wobei vorzugsweise das Verschwenken der Rahmenteile (16, 17) mit einem Abheben oder Absenken des vorderen Hauptrades (7) des jeweiligen Raupenlaufwerks (6) korrespondiert.

4. Feldhäcksler (1) nach Anspruch 3, **dadurch gekennzeichnet, dass** eines der Abhebeorgane (12) derart mit beiden Rahmenteilen (16, 17) zusammenwirkt, dass eine Abhebekraft entgegengesetzt auf die Rahmenteile (16, 17) wirkt.

5. Feldhäcksler (1) nach Anspruch 3 oder 4, **dadurch gekennzeichnet, dass** eines der Abhebeorgane (18) mit einem der Rahmenteile (16) zusammenwirkt und gegen das mindestens eine Hilfsrad (9) abgestützt ist, sodass eine auf den Rahmenteil (16) ausgeübte Abhebekraft des Abhebeorgans (18) mittels des Hilfsrads (9) in das Arbeitsfeld (19) ableitbar ist, wobei vorzugsweise der Rahmenteil (16), an dem das Abhebeorgan (18) angeschlossen ist, mit dem vorderen Hauptrad (7) zusammenwirkt.

6. Feldhäcksler (1) nach einem der Ansprüche 3 bis 5, **dadurch gekennzeichnet, dass** mindestens eines der Abhebeorgane (12, 18) eines jeweiligen Raupenlaufwerks (6) als Dämpfungselement wirkt, mittels dessen die Verschwenkung der beiden Rahmenteile (16, 17) relativ zueinander um die Schwenkachse (28) mittels des Abhebeorgans (18) dämpfbar ist.

7. Feldhäcksler (1) nach einem der Ansprüche 1 bis 6, **dadurch gekennzeichnet, dass** mindestens eines der Abhebeorgane (12, 18), vorzugsweise beide Abhebeorgane (12, 18), in Form einer Kolben-Zylinder-Einheit ausgebildet ist bzw. sind, wobei vorzugsweise mindestens eines der Abhebeorgane (12, 18) derart ausgebildet ist, dass ein Kolben (29) des jeweiligen Abhebeorgans (12, 18) sowohl aktiv aus dem zugehörigen Zylinder (30) ausfahrbar als auch aktiv in den zugehörigen Zylinder (30) einfahrbar ist.

8. Feldhäcksler (1) nach Anspruch 7, **dadurch gekennzeichnet, dass** die beiden Abhebeorgane (12, 18) unabhängig voneinander hydraulisch ansteuerbar sind, insbesondere eines der Abhebeorgane (12) aktivierbar ist, während das andere Abhebeorgan (18) inaktiv ist.

9. Verfahren zum Betrieb eines Feldhäckslers (1), umfassend die folgenden Verfahrensschritte:
a) Auf einem Arbeitsfeld (19) befindliches Erntegut (2) wird mittels des Feldhäckslers (1) aufgenommen.
b) Das aufgenommene Erntegut (2) wird mittels eines Häckselorgans (4) zerkleinert und sodann mittels eines Auswurforgans (5) aus dem Feldhäcksler (1) in Richtung eines Transportbehälters ausgeworfen.
c) Der Feldhäcksler (1) überstreicht eine Fläche des Arbeitsfeldes (19) zumindest abschnittsweise entlang von Arbeitsstreifen (20),
**gekennzeichnet durch** den folgenden Verfahrensschritt:
d) In Abhängigkeit eines Lenkwinkels eines Lenkrades (14) des Feldhäckslers (1) und/oder im Zuge der Bewegung des Feldhäckslers (1) auf einer öffentlichen Straße wird ein vorderes Hauptrad (7) mindestens eines der Raupenlaufwerk (6) des Feldhäckslers (1) von einer Oberfläche (25) des Arbeitsfeldes (19) abgehoben, sodass sich eine in Kontakt mit der Oberfläche (25) befindliche Kontaktfläche (26) eines Laufgurts (10) des Raupenlaufwerks (6) zumindest zeitweise verringert.

10. Verfahren nach Anspruch 9, **dadurch gekennzeichnet, dass** das Abheben des vorderen Hauptrades (7) bei Überschreitung eines oberen Grenzlenkwinkels automatisch ausgelöst wird, wobei der Grenzlenkwinkel maximal 20°, vorzugsweise maximal 17,5°, weiter vorzugsweise maximal 15°, gegenüber einer Nulllenkung, bei deren Einstellung der Feldhäcksler (1) geradeaus fährt, beträgt.

11. Verfahren nach Anspruch 10, **dadurch gekennzeichnet, dass** das Abheben des vorderen Hauptrades (7) erst dann automatisch ausgelöst wird, wenn der Lenkwinkel des Lenkrades (14) den oberen Grenzlenkwinkel mindestens für die Dauer eines Schwellenzeitraums überschreitet, wobei die Dauer des Schwellenzeitraums vorzugsweise mindestens 1 Sekunden, weiter vorzugsweise mindestens 2 Sekunden, beträgt.

12. Verfahren nach einem der Ansprüche 10 oder 11, **dadurch gekennzeichnet, dass** das vordere Hauptrad (7) automatisch in Abhängigkeit des Lenkwinkels des Lenkrades wieder abgesenkt wird, wobei ein unterer Grenzlenkwinkel, dessen Unterschreitung die Absenkung auslöst, höchstens 15°, vorzugsweise höchstens 13°, weiter vorzugsweise höchstens 11°, gegenüber der Nulllenkung beträgt.

13. Verfahren nach einem der Ansprüche 9 bis 12, **gekennzeichnet durch** die folgenden Verfahrensschritte:
e) Nach dem Überstreichen eines Arbeitsstreifens (20) führt der Feldhäcksler (1) im Bereich eines Vorgewendes (21) der Arbeitsfläche (19) ein Wendemanöver aus und beginnt sodann mit dem Überstreichen des als nächsten zu bearbeitenden Arbeitsstreifens (20).
f) Im Zuge des Wendemanövers wird das vordere Hauptrad (7) mindestens eines Raupenlaufwerks (6) automatisch abgehoben.

14. Verfahren nach einem der Ansprüche 9 bis 13, **dadurch gekennzeichnet, dass** das Abheben und/oder ein Absenken des vorderen Hauptrades (7) vollautomatisch in Abhängigkeit mindestens eines Betriebsparameters des Feldhäckslers (1), insbesondere in Abhängigkeit einer Arbeitsposition eines Vorsatzgeräts (31) des Feldhäckslers (1) und/oder eines Durchsatzes von Erntegut in einem Einzugsbereich (32) des Feldhäckslers (1) und/oder in Abhängigkeit seiner relativen und/oder absoluten Position auf dem Arbeitsfeld (19), erfolgt.

15. Verfahren nach einem der Ansprüche 9 bis 14, **dadurch gekennzeichnet, dass** das Wendemanöver vollautomatisch in Abhängigkeit mindestens eines Betriebsparameters des Feldhäckslers (1), insbesondere in Abhängigkeit seiner relativen und/oder absoluten Position auf dem Arbeitsfeld (19), erfolgt.

## Claims

1. A forage harvester (1) for chopping crop material (2) on a working field (19) including
- at least one conveyor member (3) for conveying cut crop material (2) in the direction of a chopping member (4),
- at least one chopping member (4) for chopping the cut crop material (2), and
- at least one ejection member (5) for ejection of chopped crop material (2),
wherein the forage harvester (1) further has at least two track-laying units (6) arranged at mutually opposite ends of a front axle of the forage harvester (1), the track-laying units (6) each including
- two main wheels (7, 8) disposed in succession in the longitudinal direction of the forage harvester (1) and in mutually opposite relationship,
- at least one auxiliary wheel (9) arranged between the main wheels (7, 8), and
- at least one track (10) passing around the main wheels (7, 8),
wherein the auxiliary wheel (9) co-operates with a lower portion (11) of the track (10) so that forces to be transmitted into a ground by way of the respective track-laying unit (6) are transmitted at least proportionately by means of the auxiliary wheel (9),
**characterised by**
two respective lift-off members (12, 18) which are arranged on the track-laying units (6) and by means of which at least the front one of the two main wheels (7, 8) of the respective track-laying unit (6) can be transferred starting from a neutral position into a lifted position, wherein the front main wheel (7) when in its neutral position is suitable for transmitting forces of the forage harvester (1) on to the working field (19) by way of the track (10) and when in its lifted position is lifted off the working field (19) in such a way that a contact surface (26) of the track (10), that is in contact with the surface (25) of the working field (19), is reduced in comparison with the main wheel (7) being in its neutral position,
and by at least one control device (13) so adapted that lifting of the front main wheel (7) is triggered by means of the control device (13) automatically in dependence on a steering angle of a steering wheel (14) of the forage harvester (1).

2. A forage harvester (1) according to claim 1 **characterised in that** the contact surface (26) of the track (10) when the front main wheel (7) is in the lifted position thereof is reduced by at least 10%, preferably at least 20%, further preferably at least 30%, in relation to the contact surface (26) when the front main wheel (7) is in its neutral position.

3. A forage harvester (1) according to claim 1 or claim 2 **characterised in that** the track-laying units (6) each have a two-part frame (15), wherein a respective one of the main wheels (7, 8) is arranged on a frame portion (16, 17) of the frame (15) and the frame portions (16, 17) are connected together pivotably in force-transmitting fashion and relative to each other about a pivot axis (28) parallel to the front axle of the forage harvester (1), wherein the lift-off members (12, 18) are suitable for pivoting the frame portions (16, 17) relative to each other, wherein preferably the pivotal movement of the frame portions (16, 17) corresponds to lifting or lowering of the front main wheel (7) of the respective track-laying unit (6).

4. A forage harvester (1) according to claim 3 **characterised in that** one of the lift-off members (12) co-operates with both frame portions (16, 17) in such a way that a lift-off force acts in opposite relationship on the frame portions (16, 17).

5. A forage harvester (1) according to claim 3 or claim 4 **characterised in that** one of the lift-off members (18) co-operates with one of the frame portions (16) and is supported against the at least one auxiliary wheel (9) so that a lifting force of the lift-off member (18), that is exerted on the frame portion (16) can be transmitted into the working field (19) by means of the auxiliary wheel (9), wherein preferably the frame portion (16) to which the lift-off member (18) is connected co-operates with the front main wheel (7).

6. A forage harvester (1) according to one of claims 3 to 5 **characterised in that** at least one of the lift-off members (12, 18) of a respective track-laying unit (6) acts as a damping element, by means of which the pivotal movement of the two frame portions (16, 17) relative to each other about the pivot axis (28) by means of the lift-off member (18) can be damped.

7. A forage harvester (1) according to one of claims 1 to 6 **characterised in that** at least one of the lift-off members (12, 18) and preferably both lift-off members (12, 18) is or are in the form of a piston-cylinder unit, wherein preferably at least one of the lift-off members (12, 18) is so designed that a piston (29) of the respective lift-off member (12, 18) can be both extended actively from the associated cylinder (30) and also retracted actively into the associated cylinder (30).

8. A forage harvester (1) according to claim 7 **characterised in that** the two lift-off members (12, 18) are hydraulically actuable independently of each other, in particular one of the lift-off members (12) is activatable while the other lift-off member (18) is inactive.

9. A method of operating a forage harvester (1) including the following method steps:
a) crop material (2) on a working field (19) is picked up by means of the forage harvester (1),
b) the picked-up crop material (2) is comminuted by means of a chopping member (4) and then ejected from the forage harvester (1) in the direction of a transport container by means of an ejection member (5), and
c) the forage harvester (1) passes over a surface of the working field (19) at least portion-wise along working strips (20),
**characterised by** the following method step:
d) in dependence on a steering angle of a steering wheel (14) of the forage harvester (1) and/or in the course of the movement of the forage harvester (1) on a public road a front main wheel (7) of at least one of the track-laying units (6) of the forage harvester (1) is lifted off a surface (25) of the working field (19) so that a contact surface (26), that is in contact with the surface (25), of a track (10) of the track-laying unit (6) is at least temporarily reduced.

10. A method according to claim 9 **characterised in that** lifting of the front main wheel (7) is automatically triggered when an upper limit steering angle is exceeded, wherein the limit steering angle is at a maximum 20°, preferably at a maximum 17.5°, further preferably at a maximum 15°, in relation to a neutral steering position, the setting of which involves the forage harvester (1) travelling straight.

11. A method according to claim 10 **characterised in that** lifting of the front main wheel (7) is first triggered automatically when the steering angle of the steering wheel (14) exceeds the upper limit steering angle at least for the duration of a threshold period, the duration of the threshold period preferably being at least one second, further preferably at least two seconds.

12. A method according to one of claims 10 and 11 **characterised in that** the front main wheel (7) is automatically lowered again in dependence on the steering angle of the steering wheel, wherein a lower limit steering angle, below which main wheel lowering is triggered, is at most 15°, preferably at most 13°, further preferably at most 11°, relative to the neutral steering position.

13. A method according to one of claims 9 to 12 **characterised by** the following method steps:
e) after passing over a working strip (20) the forage harvester (1) performs a turning manoeuvre in the region of the foreland (21) of the working surface (19) and then begins with passing over the working strip (20) which is to be worked next, and
f) in the course of the turning manoeuvre the front main wheel (7) of at least one track-laying unit (6) is automatically lifted off.

14. A method according to one of claims 9 to 13 **characterised in that** lifting and/or lowering of the front main wheel (7) is effected fully automatically in dependence on at least one operating parameter of the forage harvester (1), in particular in dependence on a working position of a front attachment (31) of the forage harvester (1) and/or a throughput of crop material in an intake region (32) of the forage harvester (1) and/or in dependence on its relative and/or absolute position on the working field (19).

15. A method according to one of claims 9 to 14 **characterised in that** the turning manoeuvre is effected fully automatically in dependence on at least one operating parameter of the forage harvester (1), in particular in dependence on its relative and/or absolute position on the working field (19).

## Revendications

1. Ensileuse (1) pour hacher du produit récolté (2) se trouvant sur une zone de travail (19), comprenant
- au moins un organe d'amenée (3) pour amener du produit récolté coupé (2) en direction d'un organe de hachage (4),
- au moins un organe de hachage (4) pour hacher le produit récolté coupé (2) ainsi que
- au moins un organe d'éjection (5) pour éjecter du produit récolté haché (2),
l'ensileuse (1) comportant en outre au moins deux trains de roulement à chenilles (6) qui sont disposés à des extrémités opposées d'un essieu avant de l'ensileuse (1), les trains de roulement à chenilles (6) comportant respectivement
- deux roues principales (7, 8) disposées l'une derrière l'autre dans la direction longitudinale de l'ensileuse (1) ainsi que opposées l'une à l'autre,
- au moins une roue auxiliaire (9) disposée entre les roues principales (7, 8),
- au moins une bande de roulement (10) entourant les roues principales (7, 8),
la roue auxiliaire (9) coopérant avec une portion inférieure (11) de la bande de roulement (10), de sorte qu'au moyen de la roue auxiliaire (9), des forces à dissiper dans un support par l'intermédiaire du train de roulement à chenilles respectif (6) sont dissipées au moins en partie, **caractérisée par**
respectivement deux organes de levage (12, 18) qui sont disposés sur les trains de roulement à chenilles (6) et au moyen desquels au moins celle des deux roues principales (7, 8) du train de roulement à chenilles respectif (6) qui est située à l'avant est transférable d'une position zéro vers une position levée, la roue principale avant (7) étant apte, lorsqu'elle se trouve dans sa position zéro, à transmettre des forces de l'ensileuse (1) à la zone de travail (19) par l'intermédiaire de la bande de roulement (10) et étant, lorsqu'elle se trouve dans sa position levée, décollée de la zone de travail (19), de sorte qu'une surface de contact (26) de la bande de roulement (10) se trouvant en contact avec la surface (25) de la zone de travail (19) est diminuée par rapport au cas où la roue principale (7) se trouve dans sa position zéro,
ainsi que par au moins un équipement de commande (13) qui est agencé de façon qu'au moyen de l'équipement de commande (13), le levage de la roue principale avant (7) soit automatiquement déclenché en fonction d'un angle de braquage d'une roue directrice (14) de l'ensileuse (1).

2. Ensileuse (1) selon la revendication 1, **caractérisée en ce que**, lorsque la roue principale avant (7) se trouve dans sa position levée, la surface de contact (26) de la bande de roulement (10) est réduite d'au moins 10 %, de préférence d'au moins 20 %, plus préférentiellement d'au moins 30 % par rapport à la surface de contact (26) dans le cas où la roue principale avant (7) se trouve dans sa position zéro.

3. Ensileuse (1) selon la revendication 1 ou 2, **caractérisée en ce que** les trains de roulement à chenilles (6) comportent respectivement un châssis en deux parties (15), respectivement une des roues principales (7, 8) étant disposée sur une partie de châssis (16, 17) du châssis (15), et les parties de châssis (16, 17) étant reliées entre elles de manière à transférer de la force ainsi que de manière pivotante l'une par rapport à l'autre autour d'un axe de pivotement (28) parallèle à l'essieu avant de l'ensileuse (1), les organes de levage (12, 18) étant aptes à faire pivoter les parties de châssis (16, 17) l'une par rapport à l'autre, de préférence le pivotement des parties de châssis (16, 17) correspondant à un levage ou à un abaissement de la roue principale avant (7) du train de roulement à chenilles respectif (6).

4. Ensileuse (1) selon la revendication 3, **caractérisée en ce qu'**un des organes de levage (12) coopère avec les deux parties de châssis (16, 17), de façon qu'une force de levage agisse en sens opposés sur les parties de châssis (16, 17).

5. Ensileuse (1) selon la revendication 3 ou 4, **caractérisée en ce qu'**un des organes de levage (18) coopère avec une des parties de châssis (16) et prend appui contre la au moins une roue auxiliaire (9), de sorte qu'une force de levage de l'organe de levage (18) exercée sur la partie de bâti (16) puisse être dissipée dans la zone de travail (19) au moyen de la roue auxiliaire (9), de préférence la partie de châssis (16) à laquelle l'organe de levage (18) est relié coopérant avec la roue principale avant (7).

6. Ensileuse (1) selon une des revendications 3 à 5, **caractérisée en ce qu'**au moins un des organes de levage (12, 18) d'un train de roulement à chenilles respectif (6) agit comme élément amortisseur au moyen duquel le pivotement des deux parties de châssis (16, 17) l'une par rapport à l'autre autour de l'axe de pivotement (28) est amortissable à l'aide de l'organe de levage (18).

7. Ensileuse (1) selon une des revendications 1 à 6, **caractérisée en ce qu'**au moins un des organes de levage (12, 18), de préférence les deux organes de levage (12, 18), est, respectivement sont conçus sous la forme d'une unité piston-cylindre, de préférence au moins un des organes de levage (12, 18) étant conçu de façon qu'un piston (29) de l'organe de levage respectif (12, 18) puisse aussi bien sortir activement du cylindre associé (30) qu'entrer activement dans le cylindre associé (30).

8. Ensileuse (1) selon la revendication 7, **caractérisée en ce que** les deux organes de levage (12, 18) sont commandable hydrauliquement indépendamment l'un de l'autre, en particulier un des organes de levage (12) est activable pendant que l'autre organe de levage (18) est inactif.

9. Procédé de fonctionnement d'une ensileuse (1), incluant les étapes de procédé suivantes :
a) Du produit récolté (2) se trouvant sur une zone de travail (19) est ramassé au moyen de l'ensileuse (1).
b) Le produit récolté ramassé (2) est broyé au moyen de l'organe de hachage (4) et ensuite éjecté au moyen d'un organe d'éjection (5) hors de l'ensileuse (1) en direction d'un contenant de transport.
c) L'ensileuse (1) parcourt au moins par portions une surface d'une zone de travail (19) suivant des bandes de travail (20),
**caractérisé par** l'étape de procédé suivante :
d) En fonction d'un angle de braquage d'une roue directrice (14) de l'ensileuse (1) et/ou au cours du déplacement de l'ensileuse (1) sur une voie publique, une roue principale avant (7) au moins d'un des trains de roulement à chenilles (6) de l'ensileuse (1) est levée d'une surface (25) de la zone de travail (19), de sorte qu'une surface de contact (26) d'une bande de roulement (10) du train de roulement à chenilles (6) se trouvant en contact avec la surface (25) diminue au moins temporairement.

10. Procédé selon la revendication 9, **caractérisé en ce que** le levage de la roue principale avant (7) est automatiquement déclenché en cas de surpassement d'un angle de braquage limite supérieur, l'angle de braquage limite étant au maximum de 20°, de préférence au maximum de 17,5°, plus préférentiellement au maximum de 15° par rapport à un braquage nul, avec le réglage duquel l'ensileuse (1) roule en ligne droite.

11. Procédé selon la revendication 10, **caractérisé en ce que** le levage de la roue principale avant (7) ne se déclenche automatiquement que si l'angle de braquage de la roue directrice (14) surpasse l'angle de braquage limite supérieur au moins pour la durée d'un intervalle de temps de seuil, la durée de l'intervalle de temps de seuil étant de préférence d'au moins 1 seconde, plus préférablement d'au moins 2 secondes.

12. Procédé selon une des revendications 10 ou 11, **caractérisé en ce que** la roue principale avant (7) est rabaissée automatiquement en fonction de l'angle de braquage de la roue directrice, un angle de braquage limite inférieur, dont le soupassement déclenche l'abaissement, étant au plus de 15°, de préférence au plus de 13°, plus préférentiellement au plus de 11° par rapport au braquage nul.

13. Procédé selon une des revendications 9 à 12, **caractérisé par** les étapes de procédé suivantes :
e) après avoir parcouru une bande de travail (20), l'ensileuse (1) effectue, dans la zone d'une tournière (21) de la surface de travail (19), une manœuvre de retournement et commence ensuite à parcourir la bande de travail suivante à travailler (20).
f) Au cours de la manœuvre de retournement, la roue principale avant (7) au moins d'un train de roulement à chenilles (6) est levée automatiquement.

14. Procédé selon une des revendications 9 à 13, **caractérisé en ce que** le levage et/ou l'abaissement de la roue principale avant (7) s'effectue entièrement automatiquement en fonction au moins d'un paramètre d'exploitation de l'ensileuse (1), en particulier en fonction d'une position de travail d'un outil frontal (31) de l'ensileuse (1) et/ou d'un débit de produit récolté dans une zone d'alimentation (32) de l'ensileuse (1) et/ou en fonction de sa position relative et/ou absolue sur la zone de travail (19) .

15. Procédé selon une des revendications 9 à 14, **caractérisé en ce que** la manœuvre de retournement s'effectue entièrement automatiquement en fonction au moins d'un paramètre d'exploitation de l'ensileuse (1), en particulier en fonction de sa position relative et/ou absolue sur la zone de travail (19).
